# EUROPÄISCHE PATENTSCHRIFT

(11) **EP 3 901 588 B1**
(45) Veröffentlichungstag und Bekanntmachung des Hinweises auf die Patenterteilung: **15.11.2023**
(21) Anmeldenummer: 21154535.5
(22) Anmeldetag: 01.02.2021
(51) Int. Cl.: G01F 1/30, G01F 13/00, G01F 1/20, A01D 41/127, G01F 1/66

(54) **VERFAHREN ZUR BESTIMMUNG EINES AUS SCHÜTTGUT BESTEHENDEN GUTSTROMS UND LANDWIRTSCHAFTLICHES ARBEITSFAHRZEUG**
METHOD FOR DETERMINING A MASS FLOW COMPRISING BULK GOODS AND AGRICULTURAL WORK VEHICLE
PROCÉDÉ DE DÉTERMINATION D'UN FLUX DE MARCHANDISES COMPOSÉ DE MARCHANDISES EN VRAC ET VÉHICULE DE TRAVAIL AGRICOLE

(30) Priorität: 21.04.2020 DE 102020110799
(43) Veröffentlichungstag der Anmeldung: 27.10.2021
(73) Patentinhaber: CLAAS Selbstfahrende Erntemaschinen GmbH, 33428 Harsewinkel (DE)
(72) Erfinder: Brandmeier, Jonas, 33428 Harsewinkel (DE); Quincke, Gunnar, 59494 Soest (DE); Vöcking, Henner, 33397 Rietberg (DE); Bürger, Alexander, 33378 Rheda-Wiedenbrück (DE); Nowack, Dominik, 48301 Nottuln (DE); Driftschröer, Peter, 33442 Herzebrock-Clarholz (DE); Raubart, Michael, 33428 Harsewinkel (DE)
(74) Vertreter: CLAAS Gruppe

(56) Entgegenhaltungen:
- US-A- 5 952 584
- US-A- 6 138 518
- US-A1- 2018 042 177
- US-A1- 2018 087 939
- US-B2- 9 826 683

## Beschreibung

Die vorliegende Erfindung betrifft ein Verfahren zur Bestimmung eines aus Schüttgut, insbesondere Körnerfrüchten, bestehenden Gutstroms gemäß dem Oberbegriff des Anspruches 1 sowie ein landwirtschaftliches Arbeitsfahrzeug gemäß dem Oberbegriff des Anspruches 13.

Zur Bestimmung eines aus Schüttgut, insbesondere Körnerfrüchten, bestehenden Gutstroms, welches mittels einer endlos umlaufenden, flächige Förderelemente aufweisenden Fördervorrichtung von einem tiefer gelegenen Schüttgutannahmebereich zu einem höher gelegenen Schüttgutabgabebereich gefördert wird, in welchem das von der Fördervorrichtung abgegebene Schüttgut durch eine im Schüttgutabgabebereich angeordnete Führungsfläche in Richtung auf eine Messeinrichtung umgelenkt wird, ist es bekannt, den Gutstrom respektive Durchsatz durch die Messung einer auf eine Sensorfläche der Messeinrichtung ausgeübten Kraft zu bestimmen.

Aus der US 2018 / 087 939 A1 ist ein Sensorsystem gemäß der Präambel des Anspruchs 1 bekannt.

Aus der EP 3 456 170 A1 ist ein Sensorsystem zur Ertragsmessung bekannt, welches an einem Gehäuse einer Fördervorrichtung im Gutabgabebereich angeordnet ist. Das von der Fördervorrichtung im Gutabgabebereich abgegebene Schüttgut wird gegen eine im Schüttgutabgabebereich angeordnete, einen gekrümmten Verlauf aufweisende Sensorfläche geschleudert, die in eine Öffnung des Gehäuses ragt. Die Sensorfläche ist am freien Ende eines Kipphebels angeordnet. Das gegen die Sensorfläche geschleuderte Erntegut bewirkt eine Auslenkung des Kipphebels, welche durch einen Sensor detektiert wird. Eine Rechenvorrichtung bestimmt anhand der Auslenkung eine durch das auftreffende Schüttgut auf die Sensorfläche ausgeübte Kraft. Basierend auf der ausgeübten Kraft wird ein aggregierter Durchsatz durch die Rechenvorrichtung ermittelt.

Ein Verfahren zur Bestimmung eines aus Schüttgut, insbesondere Körnerfrüchten, bestehenden Gutstroms ist aus der EP 0 853 234 A1 bekannt. Bei dem aus der EP 0 853 234 A1 bekannten Verfahren wird das von der Fördervorrichtung abgegebene Schüttgut durch eine im Schüttgutabgabebereich angeordnete Führungsfläche in Richtung auf eine Messeinrichtung umgelenkt. Die Messeinrichtung ist zur Bestimmung des Gutstroms, d.h. des Durchsatzes, des Schüttgutes eingerichtet, wobei der Gutstrom durch die Messung einer von dem Schüttgut auf eine Sensorfläche der Messeinrichtung ausgeübten resultierenden Kraft bestimmt wird. Nur die durch die Umlenkung erzeugte Kraft wirkt dabei auf Sensorfläche der Messeinrichtung ein und wird daher gemessen.

Es hat sich gezeigt, dass das zuletzt genannte Verfahren ausreichend gute Messergebnisse liefert, wenn sich die Bedingungen, unter denen der Schüttgutstrom der Messeinrichtung zugeführt wird und die physikalischen Eigenschaften des Schüttgutes nicht ändern, was zumeist jedoch nicht der Fall ist. Diese Änderungen, die beispielsweise während eines durch ein landwirtschaftliches Arbeitsfahrzeug durchgeführten Erntevorgangs auftreten können, wirken sich auf das Messergebnis und somit aus die darauf basierende Bestimmung des Gutstroms aus.

Somit liegt der Erfindung die Aufgabe zugrunde, ein Verfahren zur Bestimmung eines aus Schüttgut bestehenden Gutstroms sowie ein landwirtschaftliches Arbeitsfahrzeug der eingangs genannten Art derart weiterzubilden, dass eine gegenüber Änderungen der Schüttguteigenschaft und/oder Betriebskonditionen des landwirtschaftlichen Arbeitsfahrzeugs unempfindlichere Bestimmung des von der Fördervorrichtung geförderten Gutstroms ermöglicht.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 13.

Die hierauf jeweils folgenden, abhängigen Ansprüche geben jeweils vorteilhafte Weiterbildungen der Erfindung wieder.

Gemäß dem Anspruch 1 wird ein Verfahren zur Bestimmung eines aus Schüttgut, insbesondere Körnerfrüchten, bestehenden Gutstroms respektive Massenstroms vorgeschlagen, wobei das Schüttgut mittels einer endlos umlaufenden, flächige Förderelemente aufweisenden Fördervorrichtung von einem tiefer gelegenen Schüttgutannahmebereich zu einem höher gelegenen Schüttgutabgabebereich gefördert wird, in welchem das von der Fördervorrichtung abgegebene Schüttgut durch eine im Schüttgutabgabebereich angeordnete Führungsfläche in Richtung auf eine Messeinrichtung umgelenkt wird, wobei der Gutstrom durch die Messung einer auf eine Sensorfläche der Messeinrichtung ausgeübten resultierenden Kraft bestimmt wird, wobei zumindest zwei die Kraftmessung beeinflussende, von Schüttguteigenschaften unabhängige Parameter detektiert und kompensiert werden, wobei als ein erster Parameter von dem Schüttgut auf die Sensorfläche übertragene Reibungskräfte und als ein zweiter Parameter eine Neigung der Messeinrichtung berücksichtigt werden und dass zudem eine Strömungsgeschwindigkeit des die Sensorfläche überstreichenden Schüttgutes berücksichtigt wird, wobei die Strömungsgeschwindigkeit von einer Sensoranordnung bestimmt wird, die vor, innerhalb und/oder hinter der Sensorfläche angeordnet ist und die Bestimmung der Strömungsgeschwindigkeit durch die zumindest eine berührungslos arbeitende Sensoranordnung durchgeführt wird. Die Strömungsgeschwindigkeit des die Sensorfläche überstreichenden Schüttgutes variiert in Abhängigkeit vom Durchsatz, welcher von spezifischen Schüttguteigenschaften wie Feuchtigkeit, Größe des Schüttgutes oder dergleichen im Wesentlichen unabhängig ist. Eine weitere Einflussgröße bildet die auftretende Reibung zwischen dem Gutstrom respektive dem Schüttgut und zumindest der Führungsfläche sowie der Sensorfläche beim Überströmen durch den Gutstrom. Darüber hinaus variiert die Strömungsgeschwindigkeit in Abhängigkeit von den spezifischen Schüttguteigenschaften. Durch die Verrechnung der Strömungsgeschwindigkeit des Schüttgutes als zusätzliche Eingangsgröße bei der Bestimmung des Gutstromes respektive Massenstroms, wird die Ertragsmessung wesentlich robuster gegenüber Durchsatzschwankungen und Änderung der Schüttguteigenschaften. Die Strömungsgeschwindigkeit geht bei der Bestimmung der auf die Sensorfläche der Messeinrichtung ausgeübten resultierenden Kraft quadratisch ein, so dass Änderungen der Strömungsgeschwindigkeit einen nicht unerheblichen Einfluss auf die Genauigkeit der Bestimmung des Gutstroms haben. Somit sollen eine von den spezifischen Schüttguteigenschaften unabhängige Komponente der Strömungsgeschwindigkeit und eine von den spezifischen Schüttguteigenschaften abhängige Komponente der Strömungsgeschwindigkeit kompensiert werden.

Schüttguteigenschaften, welche die Strömungsgeschwindigkeit beeinflussen, sind beispielsweise bei einem Erntegut als Schüttgut Besatz, d.h. der Anteil an grünem Pflanzenmaterial, Schmutz, etc., die Erntegutart sowie die Feuchtigkeit des Erntegutes. So können Ernteguteigenschaften innerhalb eines abzuerntenden Feldes stark variieren, was beispielsweise auf Umgebungsbedingungen wie das Wetter aber auch auf Bestandsparameter zurückzuführen sein kann.

Hierbei kann die vom Schüttgut auf die Sensorfläche übertragenen Reibungskräfte durch eine geeignete Anordnung der Messeinrichtung, in welcher eine resultierende Reibungskraft normal zur Messrichtung der Messeinrichtung wirkt, kompensiert werden. Durch den Wurfverlauf des geförderten Gutstromes wird die Sensorfläche tangential angeströmt. Die dabei auftretende resultierende Reibungskraft wirkt normal zur Messrichtung, d.h. parallel zur Längsachse, der Messeinrichtung. Somit werden die in tangentialer Richtung auftretenden Reibungskräfte nicht gemessen oder haben zumindest einen nahezu verschwindenden Einfluss auf die Kraftmessung. Bevorzugt kann die Messeinrichtung hierfür eine als Plattformwägezelle ausgeführte Kraftmesszelle aufweisen.

Weiterhin kann die als zweiter, von Schüttguteigenschaften unabhängiger Parameter berücksichtigte Neigung der Messeinrichtung durch einen Sensor detektiert und bei der Bestimmung des Gutstroms kompensiert werden. Hierbei wird der Einfluss einer während des Messvorganges auftretenden Längs- und/oder Querneigung der Messeinrichtung auf das Messergebnis berücksichtigt. Bei einem landwirtschaftlichen Arbeitsfahrzeug mit einer Fördervorrichtung kann während des Fördervorgangs aufgrund der Bodenbeschaffenheit eine Quer- und/oder Längsneigung auftreten. Diese Neigung beeinflusst die von der Messeinrichtung bestimmte resultierende Zentrifugalkraft, die beim Überströmen der Sensorfläche durch das Schüttgut aufgeprägt wird. Eine Messung einer mit der auf die Sensorfläche einwirkenden resultierenden Zentrifugalkraft äquivalenten resultierende Kraft erfolgt nur dann im vollen Betrag, wenn sie exakt in Messrichtung der Messeinrichtung, das heißt der Kraftmesszelle, wirkt. Ändert sich die Neigung der Messeinrichtung aufgrund einer Längs- und oder Querneigung des Arbeitsfahrzeugs, so wirkt die Gravitationskraft unter einem geänderten Winkel auf die Sensorfläche und auf den Gutstrom ein, der die Sensorfläche überströmt. Die Änderung der resultierenden Zentrifugalkraft und der von der Kraftmesszelle gemessenen Kraft unter dem Einfluss der detektierten Neigung des landwirtschaftlichen Arbeitsfahrzeugs wird entsprechend verrechnet und dadurch bei der Bestimmung des Durchsatzes bzw. des Ertrages kompensiert.

Zudem kann als weiterer von Schüttguteigenschaften unabhängiger Parameter eine Beschleunigung des von der Fördervorrichtung abgegebenen Schüttgutes detektiert und kompensiert werden. Auf diese Weise können auf die Fördervorrichtung in im Wesentlichen vertikaler Richtung einwirkende äußere mechanische Kräfte kompensiert werden. Hierunter sind Beschleunigungskräfte zu verstehen, welche von dem Arbeitsfahrzeug beim Überfahren eines Feldes sowie von Antrieben des Arbeitsfahrzeugs, in Form von Schwingungen oder Stößen, auf die Messeinrichtung übertragen werden. Diese Beschleunigungskräfte wirken auf die Messeinrichtung in der Weise ein, dass es zu Abweichungen der von der Kraftmesszelle im Zeitpunkt des Auftretens der Beschleunigung gemessenen Kräfte kommen kann. So kann das Durchfahren einer Senke im Boden zu einer schlagartigen Beschleunigung in im Wesentlichen vertikaler Richtung führen, welche die Messung der von dem vorbeiströmenden Erntegut auf die Sensorfläche ausgeübten Zentrifugalkraft beeinflusst. Des Weiteren beeinflussen weitere Aspekte der Fahrdynamik, wie eine positive bzw. negative Beschleunigung des Arbeitsfahrzeugs, die durch die Messeinrichtung gemessene resultierende Kraft. Gleiches gilt für durch die Antriebe des Arbeitsfahrzeugs verursachte Schwingungen und Vibrationen, die durch die Karosserie oder Antriebselemente übertragen werden. Diese durch die Beschleunigungen verursachten zusätzlichen Kräfte können ebenfalls kompensiert werden.

Als weiterer von Schüttguteigenschaften unabhängiger Parameter kann eine Änderung der Antriebsdrehzahl der Fördervorrichtung detektiert und kompensiert werden. Ursächlich für einen Drehzahlabfall der Fördervorrichtung ist das Auftreten einer temporären Drückung des Antriebs des landwirtschaftlichen Arbeitsfahrzeugs. Um das Auftreten einer Drückung festzustellen, wird eine Drehzahlüberwachung insbesondere im Antriebsstrang des landwirtschaftlichen Arbeitsfahrzeugs durchgeführt. Dabei kann neben der Antriebsdrehzahl des Antriebes der Erntemaschine auch die Drehzahl der Fördervorrichtung sensorisch überwacht werden. Der temporäre Drehzahlabfall des Antriebs hat einen Drehzahlabfall respektive eine Reduzierung der Fördergeschwindigkeit der endlos umlaufenden Fördervorrichtung zur Folge. Der damit einhergehende Geschwindigkeitsabfall des entlang der Sensorfläche strömenden Schüttgutstromes, der eine Reduzierung der von dem Schüttgutstrom auf die Sensorfläche ausgeübten resultierenden Zentrifugalkraft bedeutet, wird entsprechend verrechnet. Auf diese Weise wird die von dem Schüttgutstrom auf die Sensorfläche aufgebrachte resultierende Zentrifugalkraft unter Berücksichtigung des Geschwindigkeitsabfalls, der auf eine Änderung der Antriebsdrehzahl der Fördervorrichtung zurückgeht, bei der Kraftmessung durch die Messeinrichtung zur Bestimmung des Durchsatzes bestimmt. Änderungen der Strömungsgeschwindigkeit resultieren aus unterschiedlichem Durchsatz im Elevator. Dabei führt ein höherer Durchsatz zur Verringerung und ein niedrigerer Durchsatz zu einer Erhöhung der Strömungsgeschwindigkeit.

Des Weiteren kann als ein Parameter die gravitationsbedingte Beschleunigung in Richtung der auf die Sensorfläche der Messeinrichtung ausgeübten resultierenden Kraft bestimmt und kompensiert werden. Dabei wird der Anteil der Beschleunigung bestimmt, der normal zur Sensorfläche auf das Schüttgut einwirkt. In Abhängigkeit von der Längs- und/oder Querneigung der Sensorfläche variiert die Beschleunigung in Kraftrichtung, wobei der Anteil der gravitationsbedingten Beschleunigung, der von der Normalen zur Sensorfläche abweicht, von der Messeinrichtung nicht erfasst wird. Dieser Anteil wird bei der Bestimmung der resultierenden Zentrifugalkraft, aus welcher der Gutstrom bestimmt wird, ebenfalls kompensiert.

Erfindungsgemäß kann die Bestimmung der Strömungsgeschwindigkeit durch zumindest eine berührungslos arbeitende Sensoranordnung durchgeführt werden. Durch die zumindest eine berührungslos arbeitende Sensoranordnung kann eine Beeinflussung des Gutstroms bei der kontinuierlichen Bestimmung der Strömungsgeschwindigkeit vermieden werden.

Hierzu kann die Bestimmung der Strömungsgeschwindigkeit auf dem Doppler-Effekt basierend durchgeführt werden. So kann die zumindest eine berührungslos arbeitende Sensoranordnung einen Radarsensor oder einen Lasersensor wie beispielsweise ein Laser surface velocimeter umfassen.

Alternativ oder zusätzlich kann die Bestimmung der Strömungsgeschwindigkeit mittels eines optischen Verfahrens durchgeführt werden. Unter einem optischen Verfahren wird dabei ein bildgebendes Verfahren verstanden. Hierzu kann eine optische Bilderfassungseinrichtung den Schüttgutstrom erfassen. Von der Bilderfassungseinrichtung bereitgestellte Bilddaten können mittels eines Bildanalyseverfahrens ausgewertet werden, um die Strömungsgeschwindigkeit des Gutstroms fortlaufend zu bestimmen.

Bevorzugt kann die zumindest eine Sensoranordnung zur Bestimmung der Strömungsgeschwindigkeit in einem Bereich vor, in einem Bereich innerhalb und/oder einem Bereich hinter der Sensorfläche angeordnet werden. Die Anordnung der zumindest einen Sensoranordnung in einem Bereich vor der Sensorfläche bedeutet eine Anordnung bevorzugt entlang der Wegstrecke des Gutstromes, die von der Länge der Führungsfläche vorgegeben wird. Die Anordnung der zumindest einen Sensoranordnung in einem Bereich innerhalb der Sensorfläche bedeutet eine Anordnung bevorzugt entlang der Wegstrecke des Gutstromes, die von der Länge der Sensorfläche der Messvorrichtung vorgegeben wird. Hierzu kann die zumindest eine Sensoranordnung in die Messeinrichtung integriert sein. Bevorzugt kann die zumindest eine Sensoranordnung an der Messeinrichtung in der Weise angeordnet sein, dass die zumindest eine Sensoranordnung einen im Wesentlichen störungsfreien Erfassungsbereich auf den Gutstrom aufweist. Unter einem störungsfreien Erfassungsbereich wird die Ausgestaltung insbesondere der Sensorfläche verstanden, die der zumindest eine Sensoranordnung die zur Erfassung des Gutstroms erforderliche messtechnische Zugänglichkeit ermöglicht. Im Fall einer als Radarsensor ausgeführten Sensoranordnung bedeutet dies, dass die Sensorfläche die elektromagnetischen Wellen möglichst wenig beeinflusst. Im Fall einer als Lidar-Sensor oder optische Bilderfassungseinrichtung ausgeführten Sensoranordnung bedeutet dies, dass die Sensorfläche lichtdurchlässig ist.

Gemäß einer bevorzugten Ausführungsform kann die zumindest eine Sensoranordnung zwischen der Führungsfläche und der Sensorfläche oder hinter der Sensorfläche angeordnet werden. Durch die Anordnung zwischen der Führungsfläche und der Sensorfläche oder aber hinter der Sensorfläche lässt sich der durch Schüttguteigenschaften beeinflusste Strömungsgeschwindigkeitsanteil des Gutstroms und dessen Einfluss auf die Messung der auf die Sensorfläche ausgeübten Kraft hinreichend präzise erfassen. Dabei kann auf eine angepasste Ausgestaltung der Sensorfläche und/oder der Messeinrichtung verzichtet werden, welche eine innerhalb der Sensorfläche angeordnete Sensoranordnung erforderlich werden ließe. Die möglichst hohe Genauigkeit der Bestimmung der Strömungsgeschwindigkeit ermöglicht es, die auftretenden, von den Schüttguteigenschaften abhängigen Änderungen in der Strömungsgeschwindigkeit bei der Bestimmung des Gutstroms zu kompensieren.

Durch das Vorhandensein einer geschlossenen Gutstromdecke wird ein unterer Grenzwert für die Bestimmung der Strömungsgeschwindigkeit gebildet. Sinkt der Durchsatz an gefördertem Schüttgut soweit ab, dass sich keine geschlossene Gutstromdecke im Bereich der Sensorfläche ausbildet, ist eine Bestimmung der Strömungsgeschwindigkeit nicht sinnvoll möglich.

Nicht erfindungsgemäß kann die Bestimmung der Strömungsgeschwindigkeit durch eine zur mechanischen Bestimmung einer Drehzahl eingerichteten Sensoranordnung durchgeführt werden. Hierzu ist die Anordnung beispielsweise eines Flügelzellenrades in der Führungsfläche denkbar. Die Anordnung sollte einen geringen Abstand zur Sensorfläche der Messeinrichtung aufweisen, um die Strömungsgeschwindigkeit unmittelbar vor dem Überströmen der Sensorfläche bestimmen zu können.

Die eingangs gestellte Aufgabe wird weiterhin durch ein landwirtschaftliches Arbeitsfahrzeug mit den Merkmalen des nebengeordneten Anspruches 13 gelöst.

Gemäß dem Anspruch 13 wird ein landwirtschaftliches Arbeitsfahrzeug mit einer endlos umlaufenden, flächige Förderelemente aufweisenden Fördervorrichtung vorgeschlagen, wobei die Fördervorrichtung Schüttgut von einem tiefer gelegenen Schüttgutannahmebereich zu einem höher gelegenen Schüttgutabgabebereich fördert, in welchem das von der Fördervorrichtung abgegebene Schüttgut durch eine im Schüttgutabgabebereich angeordnete Führungsfläche in Richtung auf eine Messeinrichtung umgelenkt wird, die zur Bestimmung eines Gutstroms des Schüttgutes eingerichtet ist, wobei der Gutstrom durch die Messung einer auf eine Sensorfläche der Messeinrichtung ausgeübten resultierenden Kraft bestimmt wird, und mit einer Steuer- und Regelungseinrichtung, die dazu eingerichtet ist, zumindest zwei von Schüttguteigenschaften unabhängige Parameter, welche die durch die Messeinrichtung durchzuführende Kraftmessung beeinflussen, zu kompensieren, wobei die Steuer- und Regelungseinrichtung dazu eingerichtet ist, als einen ersten Parameter vom Schüttgut auf die Sensorfläche übertragene Reibungskräfte und als einen zweiten Parameter eine Neigung der Messeinrichtung zu berücksichtigen, und dass die Steuer- und Regelungseinrichtung dazu eingerichtet ist, zudem eine durch zumindest eine Sensoranordnung bestimmte Strömungsgeschwindigkeit des die Sensorfläche überstreichenden Schüttgutes zu berücksichtigen, wobei die Strömungsgeschwindigkeit von einer Sensoranordnung bestimmt wird, die vor, innerhalb und/oder hinter der Sensorfläche angeordnet ist und die Bestimmung der Strömungsgeschwindigkeit durch die zumindest eine berührungslos arbeitende Sensoranordnung durchgeführt wird.

Das landwirtschaftliche Arbeitsfahrzeug ist dabei zur Durchführung des Verfahrens nach den Ansprüche 1 bis 12 eingerichtet. Das landwirtschaftliche Arbeitsfahrzeug zeichnet sich durch die gleichen Vorteile aus, die sich aus dem erfindungsgemäßen Verfahren ergeben. Bei dem landwirtschaftlichen Arbeitsfahrzeug handelt es sich bevorzugt um einen selbstfahrenden Mähdrescher. Es kann sich dabei auch um einen Transport- oder Überladewagen mit einer Fördervorrichtung handeln.

Bevorzugt kann die zumindest eine Sensoranordnung zur Bestimmung der Strömungsgeschwindigkeit auf dem Doppler-Effekt basierend eingerichtet sein.

Weiter bevorzugt kann die zumindest eine Sensoranordnung zur Bestimmung der Strömungsgeschwindigkeit mittels eines optischen Verfahrens eingerichtet sein. Hierzu kann eine optische Bilderfassungseinrichtung wie eine Kamera den Schüttgutstrom erfassen. Von der Bilderfassungseinrichtung bereitgestellte Bilddaten können mittels eines Algorithmus für ein Bildanalyseverfahren, welcher auf der Steuer- und Regelungseinrichtung hinterlegt und von dieser ausführbar ist, ausgewertet werden, um die Strömungsgeschwindigkeit des Gutstroms fortlaufend zu bestimmen.

Insbesondere kann die zumindest eine berührungslos arbeitende Sensoranordnung einen Radarsensor oder einen Lasersensor wie ein Laser surface velocitmeter umfassen.

Alternativ oder zusätzlich kann die zumindest eine Sensoranordnung eine bildgebende Vorrichtung und ein Bildauswertungssystem umfassen.

Erfindungsgemäß kann die zumindest eine Sensoranordnung zur Bestimmung der Strömungsgeschwindigkeit in einem Bereich vor, in einem Bereich innerhalb und/oder in einem Bereich hinter der Sensorfläche angeordnet sein. Die Anordnung der zumindest einen Sensoranordnung in einem Bereich hinter der Sensorfläche ist besonders vorteilhaft, da das Schüttgut hier einen freien Übergang zwischen der Sensorfläche der Messeinrichtung und einer nachgeordneten Fördereinrichtung aufweist. Das Schüttgut kann eine freie Wegstrecke zwischen der Sensorfläche und der nachgeordneten Fördereinrichtung zurücklegen, so dass der Erfassungsbereich der Sensoranordnung weitgehend uneingeschränkt nutzbar ist.

Insbesondere kann der Erfassungsbereich der Sensoranordnung unter einem Winkel zwischen 25° und 45°, insbesondere unter einem Winkel zwischen 30° und 40°, zum Strömungsverlauf des Schüttgutes orientiert angeordnet sein.

Die Steuer- und Regelungseinrichtung kann mit zumindest zwei Sensoren signaltechnisch verbunden sein, die zur Erfassung zumindest des ersten und des zweiten von Schüttguteigenschaften unabhängigen Parameters eingerichtet sind.

Hierfür können die zumindest zwei Sensoren als ein Beschleunigungssensor, als ein Neigungssensor und/oder ein Drehzahlsensor ausgebildet sein.

Besonders bevorzugt kann der Beschleunigungssensor dazu eingerichtet sein, eine Beschleunigung und eine Neigung zu bestimmen.

Die vorliegende Erfindung wird nachstehend anhand eines in den Zeichnungen dargestellten Ausführungsbeispieles näher erläutert.

Es zeigen:
- Fig. 1: eine schematische Seitenansicht einer landwirtschaftlichen Arbeitsmaschine;
- Fig. 2: schematisch eine Teilansicht einer als Kettenförderer ausgeführten Fördervorrichtung der Arbeitsmaschine;
- Fig. 3: schematisch eine vereinfachte Teilansicht der Fördervorrichtung gemäß Fig. 2; und
- Fig. 4: schematisch einen Ablauf zur Bestimmung von Massenstrom und Masse eines Gutstromes aus Schüttgut.

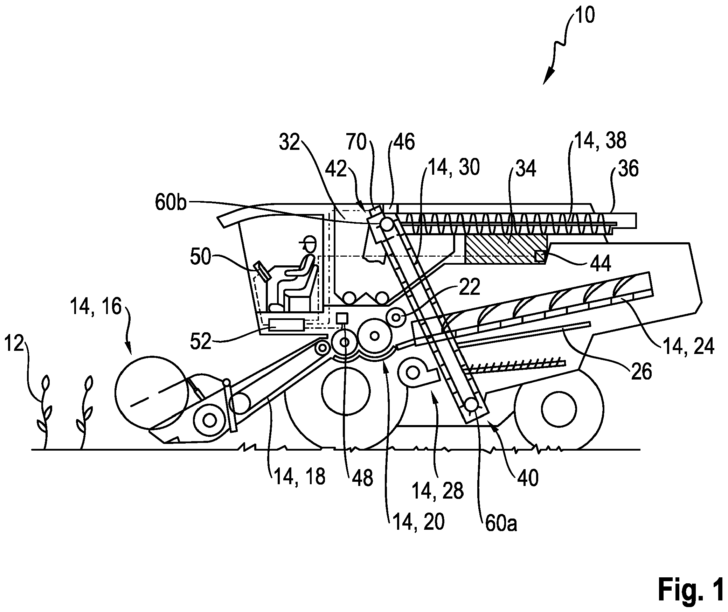

In Fig. 1 ist ein landwirtschaftliches Arbeitsfahrzeug im Sinne der vorliegenden Erfindung dargestellt, bei der es sich um einen selbstfahrenden Mähdrescher 10 handelt. Das landwirtschaftliche Arbeitsfahrzeug kann beispielsweise auch als ein Transport- oder Überladewagen ausgeführt sein. Der Mähdrescher 10 weist zur Aufnahme und Bearbeitung von Erntegut 12 eine Vielzahl von Arbeitsaggregaten 14 auf. Zu den Arbeitsaggregaten 14 zählen bei dem hier dargestellten Mähdrescher 10 ein Schneidwerk 16 zur Aufnahme des Erntegutes 12 und ein mit diesem verbundener Schrägförderer 18 zum Weitertransport des Erntegutes 12 in den Mähdrescher 10. Von dem Schrägförderer 18 wird das Erntegut 12 als Erntegutstrom an eine als weiteres Arbeitsaggregat 14 ausgebildete Drescheinrichtung 20 des Mähdreschers 10 übergeben. Durch eine Umlenktrommel 22 gelangt der Erntegutstrom in eine als Trennrotor ausgebildete Abscheidevorrichtung 24 zum Abscheiden von frei beweglichen Körnern des Erntegutstromes in einen unteren Bereich des Mähdreschers 10. Von hier aus gelangt der Erntegutstrom über einen Rücklaufboden 26 zu einer Reinigungsvorrichtung 28, welche Siebböden und ein Gebläse zur Reinigung des Erntegutes umfasst. Die frei beweglichen Körner, nachfolgend als Schüttgut 12a bezeichnet, aus dem Erntegutstrom werden von einer als Kettenförderer ausgebildeten Fördervorrichtung 30 zu einem Korntank 32 transportiert. Hierzu nimmt die Fördervorrichtung 30 das gereinigte Erntegut 12 in einem tiefer gelegenen Schüttgutannahmebereich 40 im Fußbereich der Fördervorrichtung 30 an und fördert es zu einem höher gelegenen Schüttgutabgabebereich 42 im Kopfbereich der Fördervorrichtung 30. Der Mähdrescher 10 weist zudem einen Antriebsmotor 34 auf, der die zum Betrieb der Arbeitsaggregate 14 und zur Fortbewegung des Mähdreschers 10, beispielsweise mittels eines hydrostatischen Fahrantriebes (nicht dargestellt), benötigte Antriebsleistung bereitstellt. Die Arbeitsaggregate 14 und der Fahrantrieb des Mähdreschers 10 sind hierfür mit der Antriebsmaschine 34 trieblich verbunden.

Weiterhin umfasst der Mähdrescher 10 eine Steuer- und Regelvorrichtung 52, welche mit einer Ein- und Ausgabeeinrichtung 50 im Inneren einer Kabine des Mähdreschers 10 signaltechnisch verbunden ist. Darüber hinaus ist die Steuer- und Regelvorrichtung 52 mit mehreren an dem Mähdrescher 10 verbauten Sensoren 44, 46, 48 verbunden, die der Bestimmung von Betriebs- und Erntegutparametern dienen. Bei den an bzw. in dem Mähdrescher 10 verbauten Sensoren kann es sich unter anderem um zumindest einen Drehzahlsensor 44 zur Überwachung der Antriebsdrehzahl der Antriebsmaschine 34, einen Drehzahlsensor 46, welcher die Fördergeschwindigkeit der Fördervorrichtung 30 überwacht sowie einen als Neigungssensor ausgeführten Sensor 48 zur Erfassung des Auftretens einer Längs- und/oder Querneigung des Mähdreschers 10 handeln. Weiterhin kann ein Sensor 48 als ein Beschleunigungssensor ausgeführt sein, welcher der Detektion von im Betrieb des Mähdreschers 10 auftretenden Beschleunigungen dient. Dabei kann der als Beschleunigungssensor ausgeführte Sensor 48 dazu eingerichtet sein, die Beschleunigung und die Neigung zu bestimmen. Die Anordnung weiterer Sensoren, die Betriebs- oder Erntegutparameter erfassen, welche insbesondere eine Durchsatzmessung des gereinigten Erntegutes - des Schüttgutes 12a - in der Fördervorrichtung 30 beeinflussen können, ist denkbar.

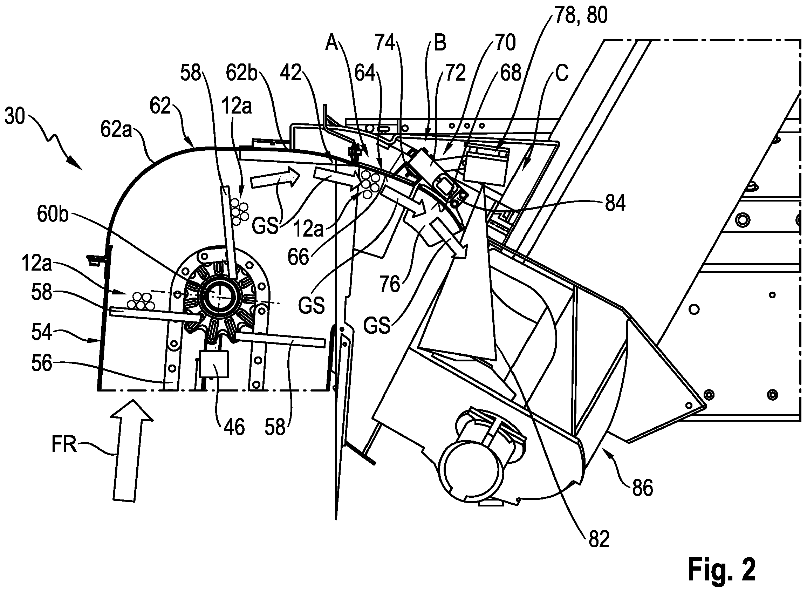

In Fig. 2 ist schematisch eine Teilansicht der als Kettenförderer ausgeführten Fördervorrichtung 30 für den Mähdrescher 10 dargestellt. Die Fördervorrichtung 30 umfasst ein Gehäuse 54, welches eine endlos umlaufende Förderkette 56 umgibt. Die Förderkette 56 wird von jeweils einem im Schüttgutannahmebereich 40 und im Schüttgutabgabebereich 42 angeordneten unteren und oberen Ketten- bzw. Antriebsrad 60a, 60b angetrieben und umgelenkt. Im Schüttgutannahmebereich 40 sowie im Schüttgutabgabebereich 42 weist das Gehäuse 54 Öffnungen auf, durch welche das Schüttgut 12a respektive das Erntegut zugeführt bzw. abgeführt wird. An der endlos umlaufenden Förderkette 56 sind gleichmäßig zueinander beabstandet flächige Förderelemente 58 angeordnet. Die paddelförmigen Förderelemente 58 erstrecken sich im Wesentlichen senkrecht zur Förderkette 56. Die Förder- respektive Umlaufrichtung der Fördervorrichtung 30 ist durch einen Pfeil FR gekennzeichnet. So kann der zumindest eine Drehzahlsensor 46 der Fördervorrichtung 30 zugeordnet sein, welcher die Fördergeschwindigkeit der Fördervorrichtung 30 überwacht. Mittels des zumindest einen Drehzahlsensors 46 wird die Drehzahl eines der Kettenräder 60a, 60b erfasst. Alternativ kann zur Drehzahlerfassung ein optischer Sensor vorgesehen sein, der die zeitlichen Abstände der vorbeilaufenden Förderelemente 58 erfasst.

Im Schüttgutabgabebereich 42 ist das obere Kettenrad 60b von einem ein- oder mehrteilig ausgebildeten Deckelabschnitt 62 abschnittsweise umgeben. Der Deckelabschnitt 62 weist einen ersten Abschnitt 62a auf, welcher das obere Kettenrad 60b in tangentialer und radialer Richtung abschnittsweise umgibt. Auf der dem Schüttgutabgabebereich 42 zugewandten Seite weist der Deckelabschnitt 62 einen zweiten Abschnitt 62b mit einem im Wesentlichen quaderförmigen Querschnitt auf. Der zweite Abschnitt 62b weist dabei in tangentialer Richtung einen geringeren Krümmungsradius als der erste Abschnitt 62a des Deckelabschnitts 62 auf.

An den Deckelabschnitt 62 schließt sich ein Führungsabschnitt 64 an. Der Führungsabschnitt 64 kann als separates Bauteil ausgeführt sein. Die Anordnung des Führungsabschnittes 64 am Deckelabschnitt 62 erfolgt dabei im Wesentlichen absatzfrei, so dass sich ein unterbrechungs- und störungsfreier Übergang einstellt. Die sich vor dem Erreichen des oberen Kettenrades 60b im Wesentlichen in der Horizontalen befindenden Förderelemente 58 transportieren das gereinigte Erntegut zunächst vom tiefer gelegenen Schüttgutannahmeabschnitt 40 zum höher gelegenen Schüttgutabgabeabschnitt 42. Durch das Umlenken der Förderelemente 58 um das obere Kettenrad 60b wird das auf dem flächigen Förderelement 58 liegende Erntegut in radialer Richtung des Deckelabschnitts 62 abgegeben. Die dem Kettenrad 60b zugewandte Innenfläche des Deckelabschnittes 62 begrenzt dabei die Flugbahn des von den Förderelementen 58 in einer Wurfbewegung abgegebenen Schüttgutes bzw. Erntegutes in radialer Richtung. Pfeile GS veranschaulichen den Verlauf des sich entlang des Deckelabschnitts 62, des nachfolgenden Führungsabschnitts 64 sowie einer dem Führungsabschnitt 64 in Förder- bzw.

Strömungsrichtung nachgeordneten Sensorfläche 68 bewegenden Gutstromes respektive Massenstroms des Schüttgutes 12a bzw. gereinigten Erntegutes. Der Führungsabschnitt 64 weist eine Führungsfläche 66 auf, die dem oberen Kettenrad 60b zugewandt ist. Beidseitig der Führungsfläche 66 sich radial erstreckende Seitenwände begrenzen den Gutstrom GS.

Dem Führungsabschnitt 64 nachgeordnet ist eine Messeinrichtung 70 angeordnet, die der Bestimmung des Durchsatzes dient. Hierzu kann an der Außenseite des Führungsabschnittes 64 eine Halterung 74 vorgesehen sein. An der Halterung 74 ist eine Kraftmesszelle 72 angebracht. Die Kraftmesszelle 72 kann als Plattformwägezelle ausgeführt sein. Die Ausführung der Kraftmesszelle 72 als Plattformwägezelle hat den Vorteil, dass diese, unabhängig von einem Hebelarm, nur Kräfte in Messrichtung misst, im Gegensatz zu dem in der EP 3 456 170 A beschriebenen Sensorsystem zur Ertragsmessung, welches die Auslenkung eines Kipphebels erfasst. Die als Plattformwägezelle ausgeführte Kraftmesszelle 72 zeichnet sich somit dadurch aus, dass nur in Messrichtung wirkende Kräfte bzw. anteilige Kräfte bestimmt werden. Kräfte bzw. anteilige Kräfte werden von der als Plattformwägezelle ausgeführte Kraftmesszelle 72 unabhängig von einem Hebelarm gemessen. An der Kraftmesszelle 72 ist die Sensorfläche 68 angeordnet, die in tangentialer Richtung einen entsprechend dem Verlauf des Gutstroms GS gekrümmten Verlauf aufweist. Sich beidseitig der Sensorfläche 68 radial erstreckende Seitenwände 76 begrenzen den Gutstrom GS. Die Kraftmesszelle 72 und die Sensorfläche 68 sind Bestandteil der Messeinrichtung 70 zur Bestimmung des Durchsatzes. Die Sensorfläche 68 und die Kraftmesszelle 72 sind so zueinander angeordnet, dass an der Sensorfläche 68 auftretende Reibkräfte RK senkrecht zur Messrichtung in die Kraftmesszelle 72 eingeleitet werden.

Die Sensorfläche 68 der Messeinrichtung 70 ist derart im Kopfbereich der Fördervorrichtung 30 angeordnet, dass sich im Übergang von der Führungsfläche 66 auf die Sensorfläche 68 ein tangentialer Verlauf einstellt. Die Positionierung der Messeinrichtung 70 erfolgt dabei im Auslaufbereich der Fördervorrichtung 30, das heißt nachdem das Schüttgut bzw. Erntegut die paddelförmigen Förderelemente 58 vollständig verlassen hat. Die Führungsfläche 66 und die Sensorfläche 68 weisen eine abrasionsbeständige, verschleißfeste Oberfläche auf, welche sich durch eine geringe Oberflächenrauigkeit auszeichnet.

Aus der Fördervorrichtung 30 im Schüttgutabgabebereich 42 austretendes gereinigtes Erntegut 12 wird an eine Förderschnecke 86 übergeben, welche das Schüttgut 12a in Form der Körner in den Korntank 32 des Mähdreschers 10 überführt.

Im dargestellten Ausführungsbeispiels ist in einem Bereich C hinter der Sensorfläche 68 zumindest eine Sensoranordnung 78 angeordnet, die zur Bestimmung einer Strömungsgeschwindigkeit v_SG des Gutstroms GS eingerichtet ist. Die Bestimmung der Strömungsgeschwindigkeit v_SG wird durch zumindest eine berührungslos arbeitende Sensoranordnung 78 durchgeführt. Dazu kann die Bestimmung der Strömungsgeschwindigkeit v_SG auf dem Doppler-Effekt basierend durchgeführt werden. Hierzu kann die zumindest eine Sensoranordnung 78 einen Radarsensor 80 oder einen - nicht dargestellten - Lasersensor wie ein Laser surface velocimeter umfassen. Der Radarsensor 80 respektive der Lasersensor weist einen Erfassungsbereich 82 auf, welcher auf den Gutstrom GS gerichtet ist, der von der Sensorfläche 68 in Richtung der Förderschnecke 8 gelenkt wird. Der Erfassungsbereich 82 der Sensoranordnung 78 ist unter einem Winkel zwischen 25° und 45°, insbesondere unter einem Winkel zwischen 30° und 40°, zum Strömungsverlauf des Schüttgutes 12a orientiert angeordnet.

Alternativ oder zusätzlich erfindungsgemäß kann die zumindest eine Sensoranordnung 78 zur Bestimmung der Strömungsgeschwindigkeit v_SG in einem Bereich A vor und/oder in einem Bereich B innerhalb der Sensorfläche 68 angeordnet sein.

Bei einer Anordnung im Bereich A vor der Sensorfläche 68 kann die zumindest eine Sensoranordnung 78 bevorzugt oberhalb der Führungsfläche 66 des Führungsabschnittes 64 angeordnet sein. Denkbar ist auch eine Anordnung im Bereich zwischen der Führungsfläche 66 und der Sensorfläche 68.

Bei einer Anordnung im Bereich B innerhalb der Sensorfläche 68 kann die zumindest eine Sensoranordnung 78 entlang des Verlaufs der Sensorfläche 68 angeordnet sein. Insbesondere kann die zumindest eine Sensoranordnung 78 hinter einer der Befestigung der Sensorfläche 68 an der Kraftmesszelle 72 dienenden Halterung 84 angeordnet sein. Bevorzugt ist die zumindest eine Sensoranordnung 78 unmittelbar vor oder hinter der Sensorfläche 68 angeordnet.

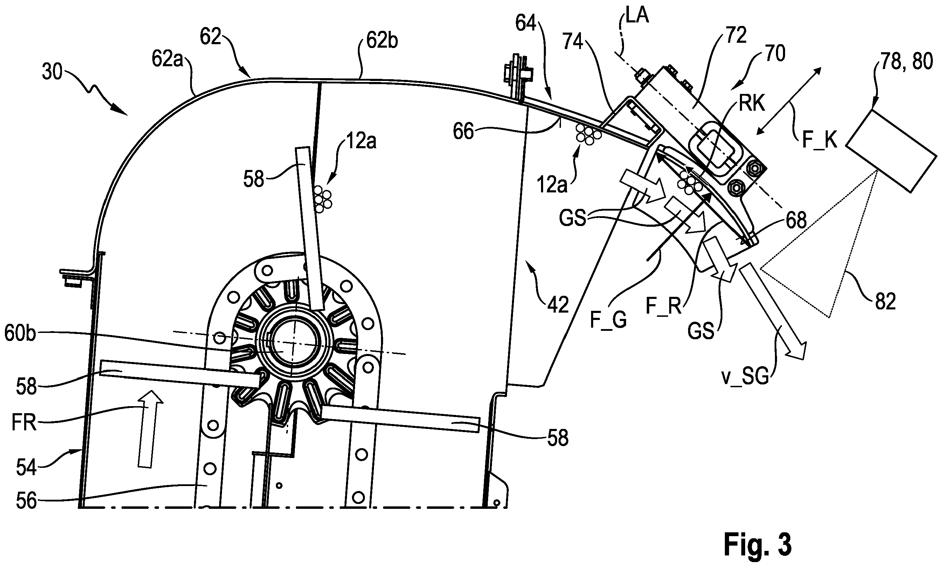

In Fig. 3 ist schematisch eine vereinfachte Teilansicht der Fördervorrichtung 30 gemäß Fig. 2 dargestellt, anhand derer die Funktionsweise des Verfahrens zur Bestimmung des aus Schüttgut bestehenden Gutstroms GS erläutert wird. Die Kraftmesszelle 72 ist als eine Plattformwägezelle ausgeführt. Dieser Typ einer Kraftmesszelle 72 misst die auf die Sensorfläche 68 einwirkenden Kräfte unabhängig von einem Hebelarm, der aus dem Abstand zwischen der Anbringung an der Halterung 74 und der Anordnung der Sensorfläche 68 an der Kraftmesszelle 72 resultiert. Der entlang der Sensorfläche 68 strömende Gutstrom GS erzeugt aufgrund seiner Umlenkung durch die gekrümmte Sensorfläche 68 eine durch Neigung und Gravitation beeinflusste resultierende Zentrifugalkraft, welche durch einen Kraftvektor F_G veranschaulicht ist. Die Kraftmesszelle 72 ist derart angeordnet, dass die Messrichtung der Messeinrichtung 70 und die auf die Sensorfläche 68 einwirkende resultierende Zentrifugalkraft F_G gleichgerichtet sind. Die Kraftmesszelle 72 nimmt eine durch einen resultierenden Kraftvektor F_K veranschaulichte gemessene Kraft auf. Die Orientierung des Kraftvektors F_K stellt zugleich die Messrichtung der Kraftmesszelle 72 dar. Aus der an der Oberfläche der Sensorfläche 68 auftretenden Reibung des vorbeiströmenden Erntegutes resultieren Reibungskräfte RK, welche durch einen Kraftvektor F_R veranschaulicht werden. Der Verlauf des Kraftvektors F_R der resultierenden Reibungskräfte ist parallel zur Längsachse LA der Kraftmesszelle 72 beziehungsweise normal zur Messrichtung der Kraftmesszelle 72. Die Reibungskräfte RK werden axial zur Längsachse LA in die Kraftmesszelle 72 eingeleitet, so dass die resultierenden Reibungskräfte (F_R) nicht in die Kraftmessung zur Bestimmung des Gutstroms GS eingehen. Hierdurch ist eine die Reibungskräfte RK kompensierende Anordnung der Sensorfläche 68 gegeben.

Nachstehend wird das Verfahren zur Bestimmung des Gutstroms GS weiter erläutert, der von der Fördervorrichtung 30 in den Korntank 32 gefördert wird. Wie bereits ausgeführt wurde, wird das von der Fördervorrichtung 30 abgegebene gereinigte Schüttgut 12a bzw. Erntegut von der im Schüttgutabgabebereich 42 vorgesehenen Führungsfläche 66 des Führungsabschnittes 64 in Richtung der Sensorfläche 68 der Messeinrichtung 70 umgelenkt. Der Massenstrom 88 bzw. die Masse 90 des Gutstroms GS wird durch die Messung der auf die Sensorfläche 68 der Messeinrichtung 70 ausgeübten resultierenden Kraft (Kraftvektor F_K) bestimmt, wobei zumindest zwei diese Kraftmessung beeinflussende Parameter kompensiert werden. Zum einen wird als ein erster Parameter aufgrund der besonderen Anordnung der Kraftmesszelle 72 die resultierende Reibungskraft (Kraftvektor F_R), die der Gutstrom GS auf die Sensorfläche 68 aufbringt, kompensiert.

Als ein zweiter Parameter wird eine Neigung der Messeinrichtung 70 berücksichtigt. Die Kraftmesszelle 72 misst die auf die Sensorfläche 68 der Messeinrichtung 70 ausgeübte resultierende Zentrifugalkraft, veranschaulicht durch den Kraftvektor F_G, nur dann im vollem Betrag, wenn diese exakt in Kraftrichtung der Kraftmesszelle 70, d.h. orthogonal zur Längsachse LA wirkt. Ändert sich die Neigung der Kraftmesszelle 70 aufgrund einer Längs- und/oder Querneigung des landwirtschaftlichen Arbeitsfahrzeugs, hier des Mähdreschers 10, wirkt die Gravitation unter einem geänderten Winkel auf die Sensorfläche 68 und auf den Gutstrom GS ein. Diese Änderung der Kräfte unter Einfluss der Neigung des Mähdreschers 10 respektive der Kraftmesszelle 72 wird entsprechend verrechnet und bei der Bestimmung des Ertrags bzw. des Durchsatzes kompensiert. Die Neigungskompensation kann dabei intern in der Messeinrichtung 70 erfolgen oder durch zumindest einen als Neigungssensor und/oder als Beschleunigungssensor ausgeführten Sensor 48, dessen Signale an die Steuer- und Regelungsvorrichtung 52 übertragen und von dieser ausgewertet werden, um den Einfluss der Neigung auf die Kraftmessung, d.h. die Messung zur Bestimmung des resultierenden Kraftvektors F_K, kompensieren zu können.

Weiterhin beeinflussen auf die Fördervorrichtung 30 in im Wesentlichen vertikaler Richtung einwirkende äußere mechanische Kräfte die Bestimmung des Durchsatzes durch die Kraftmessung mit der Messeinrichtung 70. Hierbei handelt es sich zum Beispiel um Beschleunigungskräfte, welche durch die Fahrt auf dem Feld bzw. durch den Antrieb 34 des Mähdreschers 10 auftreten. Im letzteren Fall handelt es sich um durch den Antrieb 34 und Antriebselemente des Antriebsstranges des Mähdreschers 10 auf die Karosserie übertragene Schwingungen, die auch in die Fördervorrichtung 30 eingeleitet werden. Auch diese Kräfte wirken auf die Messeinrichtung 70 in der Weise ein, dass es zu Abweichungen der von der Kraftmesszelle 72 im Zeitpunkt des Auftretens der Beschleunigung gemessenen resultierenden Kräfte F_K kommt. So kann das Durchfahren einer Senke im Boden zu einer schlagartigen Beschleunigung in im Wesentlichen vertikaler Richtung führen, welche die Messung der von dem vorbeiströmenden Schüttgut 12a bzw. Erntegut auf die Sensorfläche 68 ausgeübten resultierenden Zentrifugalkraft F_G beeinflusst. Diese durch die Beschleunigung verursachte zusätzliche Kraft wird ebenfalls kompensiert. Dabei kann auch diese Kompensation intern in der Messeinrichtung 70 erfolgen. Alternativ werden die Signale des als Beschleunigungssensor ausgeführten Sensors 48 an die Steuer- und Regelungsvorrichtung 52 übertragen und von dieser ausgewertet, um den Einfluss der durch die Bewegung des Mähdreschers 10 hervorgerufenen Beschleunigungskräfte auf die Kraftmessung kompensieren zu können.

Mittels des als Drehzahlsensor ausgeführten Sensors 44 und/oder 46 lässt sich eine temporär auftretende Drückung, das heißt ein Drehzahlabfall, des Antriebsmotors 34 erfassen. Der temporäre Drehzahlabfall des Antriebsmotors 34 hat einen Drehzahlabfall respektive eine Reduzierung der Fördergeschwindigkeit der Fördervorrichtung 30 zur Folge. Der damit einhergehende Geschwindigkeitsabfall des entlang der Sensorfläche 68 strömenden Gutstromes GS, der eine Reduzierung des Durchsatzes bedeutet, wird entsprechend von der Steuer- und Regelvorrichtung 52 verrechnet. Auf diese Weise wird die von dem Gutstrom GS auf die Sensorfläche 68 aufgebrachte resultierende Zentrifugalkraft F_G unter Berücksichtigung des Geschwindigkeitsabfalls durch die Motordrückung bei der Kraftmessung durch die Messeinrichtung 70 zur Bestimmung des Durchsatzes bestimmt.

Erfindungsgemäß wird die Strömungsgeschwindigkeit v_SG des die Sensorfläche 68 überstreichenden Gutstromes GS an Schüttgut 12a berücksichtigt. Eine Änderung der Strömungsgeschwindigkeit v_SG tritt unter anderem dann auf, wenn die Messbedingungen variieren, d.h. wenn auf Grund von sich ändernden Eigenschaften des von dem Mähdrescher 10 aufgenommenen und bearbeiteten bzw. verarbeiteten Erntegutes 12 bzw. Schüttgutes 12a die Strömungsgeschwindigkeit v_SG variiert. So führt ein abzuerntender Feldbereich mit einer temporär niedrigeren Bestandsdichte an Erntegut 12 zu einer geringeren Fördermenge auf dem jeweiligen Förderelement 58. Die geringere Fördermenge wirkt sich nicht signifikant auf die Fördergeschwindigkeit der Fördervorrichtung 30 aus. Jedoch beeinflusst der daraus resultierende geringere Gutstrom GS die Kraftmessung durch die Messeinrichtung 70.

So führt ein höherer Durchsatz an Schüttgut 12a zu einer Geschwindigkeitsverringerung des entlang der Führungsfläche 66 sowie der Sensorfläche 68 strömenden Erntegutes 12, während ein niedrigerer Durchsatz zur Geschwindigkeitserhöhung führt. Die Strömungsgeschwindigkeit v_SG geht bei der Bestimmung des Gutstroms GS mittels der als Plattformwägezelle ausgeführten Kraftmesszelle 70 quadratisch ein, wodurch größere Abweichungen bei der Bestimmung des Gutstroms GS auftreten können.

Ein weiterer Einflussfaktor, der die Strömungsgeschwindigkeit v_SG verändert, ist die Reibung an den Oberflächen zumindest der Führungsfläche 66 sowie der Sensorfläche 68, an denen das Schüttgut 12a entlang strömt.

Während der Durchsatz und die Reibung als von den Schüttguteigenschaften im Wesentlichen unabhängige Parameter anzusehen sind, beeinflussen zudem die von den Schüttguteigenschaften abhängigen Parameter die Strömungsgeschwindigkeit v_SG anteilig. Schüttguteigenschaften, welche die Strömungsgeschwindigkeit v_SG beeinflussen, sind beispielsweise bei einem Erntegut 12 als Schüttgut 12a Besatz, d.h. der Anteil an grünem Pflanzenmaterial, Schmutz, etc., die Erntegutart sowie die Feuchtigkeit des Erntegutes 12.

Um eine robustere Ertragsmessung durch die Bestimmung des Gutstroms GS zu ermöglichen, welche wechselnde Bedingungen während des Erntevorganges berücksichtigt, werden der Steuer- und Regelungseinrichtung 52 als Eingangssignale der resultierende Kraftvektor F_K der von der Kraftmesszelle 70 aufgenommenen Kräfte, die resultierende Zentrifugalkraft F_G, die Fördergeschwindigkeit der Fördervorrichtung 30, sowie die Strömungsgeschwindigkeit v_SG zur Verarbeitung zugeführt und verrechnet. Weiterhin wird in Abhängigkeit von der detektierten Neigung der Messvorrichtung 72 die Änderung der Gewichtskraft der Sensorfläche 68 kompensiert. Das Ausgangssignal bildet der Gutstrom GS.

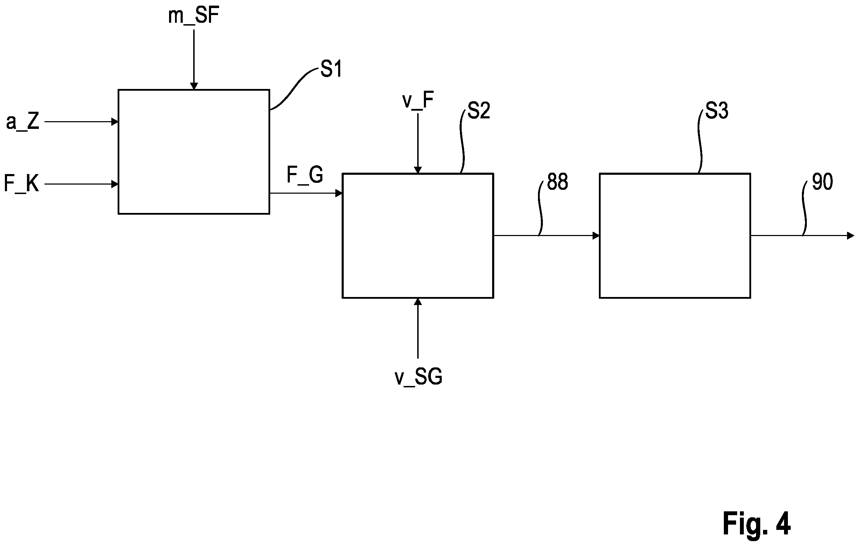

In Fig. 4 ist schematisch und exemplarisch ein Ablauf zur Bestimmung von Massenstrom 88 und Masse 90 des Gutstromes GS aus Schüttgut 12a dargestellt.

In einem ersten Schritt S1 wird die resultierende Kraft F_K durch die Kraftmesszelle 70 gemessen, welche der tangential anströmende Gutstrom GS bei der Umlenkung durch die Sensorfläche 68 als Zentrifugalkräfte auf diese überträgt, um daraus die resultierende Zentrifugalkraft F_G zu bestimmen. Beeinflusst wird die Messung der resultierenden Kraft F_K zum einen durch das Eigengewicht m_SF der Sensorfläche 68 und zum anderen durch Beschleunigungen a_Z, die aus Bewegungen und/oder Neigungen der Kraftmesszelle 70 resultieren, die von dem Mähdrescher 10 im laufenden Betrieb auf die Kraftmesszelle 70 übertragen werden. Das Eigengewicht m_SF der Sensorfläche 68 ist bekannt und in der Steuer- und Regelvorrichtung 52 hinterlegt. Die Beschleunigungen a_Z werden durch den zumindest einen als Beschleunigungssensor ausgeführten Sensor 48 bestimmt. Die Steuer- und Regelvorrichtung 52 ist dazu eingerichtet, unter Berücksichtigung der Einflussgrößen Eigengewicht m_SF der Sensorfläche 68 und Beschleunigungen a_Z die resultierende Zentrifugalkraft F_G zu bestimmen.

In einem zweiten Schritt S2 wird aus der bestimmten Zentrifugalkraft F_G der Gutstrom GS respektive Massenstrom 88 des Schüttgutes 12a bestimmt, welcher die Zentrifugalkraft F_G hervorgerufen hat. Die Zentrifugalkraft F_G ist von der Strömungsgeschwindigkeit v_SG abhängig, mit welcher sich der Gutstrom GS an der Sensorfläche 68 vorbeibewegt. Die Variation der Strömungsgeschwindigkeit v_SG basiert, wie weiter oben bereits ausgeführt, auf Schwankungen im Durchsatz sowie der auftretenden Reibung an den Oberflächen zumindest der Führungsfläche 66 sowie der Sensorfläche 68 sowie Schüttguteigenschaften, welche die Strömungsgeschwindigkeit v_SG beeinflussen. Schwankungen im Durchsatz des von der Fördervorrichtung 30 geförderten Schüttgutes 12a können mittels der Drehzahlsensoren 44, 46 kontinuierlich bestimmt und von der Steuer- und Regelvorrichtung 52 ausgewertet werden. Die Schwankungen im Durchsatz gehen dabei als Fördergeschwindigkeit v_F des Schüttgutes 12a beim Verlassen der Fördervorrichtung 30 vor der Kraftmesszelle 70 in die Berechnung des Massenstroms 88 ein. Die durch die Sensoranordnung 78 kontinuierlich bestimmte Strömungsgeschwindigkeit v_SG, die vorzugsweise hinter der Kraftmesszelle 70 gemessen wird, geht ebenfalls in die Massenstromberechnung durch die Steuer- und Regelvorrichtung 52 ein. Aus der bestimmten Fördergeschwindigkeit v_F des Schüttgutes 12a beim Verlassen der Fördervorrichtung 30 vor der Führungsfläche 66 und der vorzugsweise hinter der Kraftmesszelle 70 gemessenen Strömungsgeschwindigkeit v_SG lässt sich die effektive Geschwindigkeit des die Sensorfläche 68 überströmenden Gutstroms GS ermitteln. Dadurch werden die verschiedenen vom Schüttgut 12a abhängigen und unabhängigen Einflüsse auf die Strömungsgeschwindigkeit v_SG berücksichtigt bzw. kompensiert.

In einem dritten Schritt S3 kann aus dem im zweiten Schritt S2 bestimmten Massenstrom 88 die Masse 90 an im Korntank 32 aufgenommenem Schüttgut 12a durch Integration ermittelt werden.

**Bezugszeichenliste**

| | | | |
|---|---|---|---|
| 10 | Mähdrescher | 68 | Sensorfläche |
| 12 | Erntegut | 70 | Messeinrichtung |
| 12a | Schüttgut | 72 | Kraftmesszelle |
| 14 | Arbeitsaggregate | 74 | Halterung |
| 16 | Schneidwerk | 76 | Seitenwand |
| 18 | Schrägförderer | 78 | Sensoranordnung |
| 20 | Drescheinrichtung | 80 | Radarsensor |
| 22 | Umlenktrommel | 82 | Erfassungsbereich |
| 24 | Abscheidevorrichtung | 84 | Halterung |
| 26 | Rücklaufboden | 86 | Förderschnecke |
| 28 | Reinigungsvorrichtung | 88 | Massenstrom |
| 30 | Fördervorrichtung | 90 | Masse |
| 32 | Korntank | A | Bereich |
| 34 | Antriebsmaschine | B | Bereich |
| 40 | Schüttgutannahmebereich | B | Bereich |
| 42 | Schüttgutabgabebereich | a_Z | Beschleunigung |
| 44 | Drehzahlsensor | FR | Förderrichtung |
| 46 | Drehzahlsensor | F_G | Kraftvektor Zentrifugalkraft |
| 48 | Sensor | F_K | Kraftvektor |
| 50 | Ein-Ausgabeeinrichtung | F_R | Kraftvektor Reibungskraft |
| 52 | Steuer- und Regelvorrichtung | GS | Gutstrom |
| 54 | Gehäuse | LA | Längsachse |
| 56 | Förderkette | M_SF | Eigengewicht Sensorfläche |
| 58 | Förderelemente | RK | Reibkraft |
| 60a | Unteres Kettenrad | S1 | Erster Schritt |
| 60b | Oberes Kettenrad | S2 | Zweiter Schritt |
| 62 | Deckelabschnitt | S3 | Dritter Schritt |
| 62a | Erster Abschnitt von 62 | v_F | Fördergeschwindigkeit |
| 62b | Zweiter Abschnitt von 62 | v_SG | Strömungsgeschwindigkeit |
| 64 | Führungsabschnitt | | |
| 66 | Führungsfläche | | |

## Patentansprüche

1. Verfahren zur Bestimmung eines aus Schüttgut (12a), insbesondere Körnerfrüchten, bestehenden Gutstroms (GS), wobei das Schüttgut mittels einer endlos umlaufenden, flächige Förderelemente (58) aufweisenden Fördervorrichtung (30) von einem tiefer gelegenen Schüttgutannahmebereich (40) zu einem höher gelegenen Schüttgutabgabebereich (42) gefördert wird, in welchem das von der Fördervorrichtung (30) abgegebene Schüttgut (12a) durch eine im Schüttgutabgabebereich (42) angeordnete Führungsfläche (66) in Richtung auf eine Messeinrichtung (70) umgelenkt wird, wobei der Gutstrom (GS) durch die Messung einer auf eine Sensorfläche (68) der Messeinrichtung (70) ausgeübten resultierenden Kraft (F_K) bestimmt wird, wobei zumindest zwei die Kraftmessung beeinflussende, von Schüttguteigenschaften unabhängige Parameter detektiert und kompensiert werden, **dadurch gekennzeichnet, dass** als ein erster Parameter vom Schüttgut auf die Sensorfläche (68) übertragene Reibungskräfte (FR) und als ein zweiter Parameter eine Neigung der Messeinrichtung (70) berücksichtigt werden und dass zudem eine Strömungsgeschwindigkeit (v_SG) des die Sensorfläche (68) überstreichenden Schüttgutes (12a) berücksichtigt wird, wobei die Strömungsgeschwindigkeit (V_SG) von einer Sensoranordnung (78) bestimmt wird, die vor, innerhalb und / oder hinter der Sensorfläche (68) angeordnet ist und die Bestimmung der Strömungsgeschwindigkeit (v_SG) durch die zumindest eine berührungslos arbeitende Sensoranordnung (78) durchgeführt wird .

2. Verfahren nach Anspruch 1, **dadurch gekennzeichnet, dass** die vom Schüttgut auf die Sensorfläche (68) übertragenen Reibungskräfte (FR) durch eine geeignete Anordnung der Messeinrichtung (70), in welcher eine resultierende Reibungskraft (F_R) normal zur Messrichtung der Messeinrichtung (70) wirkt, kompensiert werden.

3. Verfahren nach einem der Ansprüche 1 oder 2, **dadurch gekennzeichnet, dass** die als zweiter, von Schüttguteigenschaften unabhängiger Parameter berücksichtigte Neigung der Messeinrichtung (70) durch einen Sensor (48) detektiert und bei der Bestimmung des Gutstroms (GS) kompensiert wird.

4. Verfahren nach einem der vorhergehenden Ansprüche, **dadurch gekennzeichnet, dass** als weiterer von Schüttguteigenschaften unabhängiger Parameter eine Beschleunigung des von der Fördervorrichtung (30) abgegebenen Schüttgutes (12a) detektiert und kompensiert wird.

5. Verfahren nach einem der vorhergehenden Ansprüche, **dadurch gekennzeichnet, dass** als weiterer von Schüttguteigenschaften unabhängiger Parameter eine Änderung der Antriebsdrehzahl der Fördervorrichtung (30) detektiert und kompensiert wird.

6. Verfahren nach einem der vorhergehenden Ansprüche, **dadurch gekennzeichnet, dass** als ein Parameter die gravitationsbedingte Beschleunigung in Richtung der auf die Sensorfläche (68) der Messeinrichtung (70) ausgeübten resultierenden Kraft (F_G) bestimmt und kompensiert wird.

7. Verfahren nach einem der vorhergehenden Ansprüche, **dadurch gekennzeichnet, dass** die Bestimmung der Strömungsgeschwindigkeit (v_SG) auf dem Doppler-Effekt basierend durchgeführt wird.

8. Verfahren nach einem der vorhergehenden Ansprüche, **dadurch gekennzeichnet, dass** die Bestimmung der Strömungsgeschwindigkeit (v_SG) mittels eines optischen Verfahrens durchgeführt wird.

9. Verfahren nach einem der vorhergehenden Ansprüche, **dadurch gekennzeichnet, dass** die zumindest eine Sensoranordnung (78) zur Bestimmung der Strömungsgeschwindigkeit (v_SG) in einem Bereich (A) vor, in einem Bereich (B) innerhalb und/oder einem Bereich (C) hinter der Sensorfläche (68) angeordnet wird.

10. Verfahren nach einem der vorhergehenden Ansprüche, **dadurch gekennzeichnet, dass** die zumindest eine Sensoranordnung (78) zwischen der Führungsfläche (66) und der Sensorfläche (68) oder hinter der Sensorfläche (68) angeordnet wird.

11. Verfahren nach einem der vorhergehenden Ansprüche, **dadurch gekennzeichnet, dass** das Vorhandensein einer geschlossenen Gutstromdecke einen unteren Grenzwert für die Bestimmung der Strömungsgeschwindigkeit (v_SG) bildet.

12. Verfahren nach einem der vorhergehenden Ansprüche, **dadurch gekennzeichnet, dass** die Bestimmung der Strömungsgeschwindigkeit (v_SG) durch eine zur mechanischen Bestimmung einer Drehzahl eingerichteten Sensoranordnung durchgeführt wird.

13. Landwirtschaftliches Arbeitsfahrzeug mit einer endlos umlaufenden, flächige Förderelemente (58) aufweisenden Fördervorrichtung (30), welche Schüttgut (12a) von einem tiefer gelegenen Schüttgutannahmebereich (40) zu einem höher gelegenen Schüttgutabgabebereich (42) fördert, in welchem das von der Fördervorrichtung (30) abgegebene Schüttgut durch eine im Schüttgutabgabebereich (42) angeordnete Führungsfläche (66) in Richtung auf eine Messeinrichtung (70) umgelenkt wird, die zur Bestimmung eines Gutstroms des Schüttgutes (12a) eingerichtet ist, wobei der Gutstrom durch die Messung einer auf eine Sensorfläche (68) der Messeinrichtung (70) ausgeübten resultierenden Kraft (F_K) bestimmt wird, und mit einer Steuer- und Regelungseinrichtung (52), die dazu eingerichtet ist, zumindest zwei von Schüttguteigenschaften unabhängige Parameter, welche die durch die Messeinrichtung (70) durchzuführende Kraftmessung beeinflussen, zu kompensieren, **dadurch gekennzeichnet, dass** die Steuer- und Regelungseinrichtung (52) dazu eingerichtet ist, als einen ersten Parameter vom Schüttgut (12a) auf die Sensorfläche (68) übertragene Reibungskräfte und als einen zweiten Parameter eine Neigung der Messeinrichtung (70) zu berücksichtigen, und dass die Steuer- und Regelungseinrichtung (52) dazu eingerichtet ist, zudem eine durch zumindest eine Sensoranordnung (78) bestimmte Strömungsgeschwindigkeit (v_SG) des die Sensorfläche (68) überstreichenden Schüttgutes (12) zu berücksichtigen, wobei die Strömungsgeschwindigkeit (V_SG) von einer Sensoranordnung (78) bestimmt wird, die vor, innerhalb und / oder hinter der Sensorfläche (68) angeordnet ist und die Bestimmung der Strömungsgeschwindigkeit (v_SG) durch die zumindest eine berührungslos arbeitende Sensoranordnung (78) durchgeführt wird.

14. Landwirtschaftliches Arbeitsfahrzeug nach Anspruch 13, **dadurch gekennzeichnet, dass** die zumindest eine Sensoranordnung (78) zur Bestimmung der Strömungsgeschwindigkeit (v_SG) auf dem Doppler-Effekt basierend eingerichtet ist.

15. Landwirtschaftliches Arbeitsfahrzeug nach Anspruch 13, **dadurch gekennzeichnet, dass** die zumindest eine Sensoranordnung (78) zur Bestimmung der Strömungsgeschwindigkeit (v_SG) mittels eines optischen Verfahrens eingerichtet ist.

16. Landwirtschaftliches Arbeitsfahrzeug nach einem der vorhergehenden Ansprüche, **dadurch gekennzeichnet, dass** die zumindest eine Sensoranordnung (78) einen Radarsensor (80) oder einen Lasersensor umfasst.

17. Landwirtschaftliches Arbeitsfahrzeug nach einem der vorhergehenden Ansprüche, **dadurch gekennzeichnet, dass** die zumindest eine Sensoranordnung (78) eine bildgebende Vorrichtung und ein Bildauswertungssystem umfasst.

18. Landwirtschaftliches Arbeitsfahrzeug nach einem der vorhergehenden Ansprüche, **dadurch gekennzeichnet, dass** die zumindest eine Sensoranordnung (78) zur Bestimmung der Strömungsgeschwindigkeit (v_SG) in einem Bereich (A) vor, in einem Bereich (B) innerhalb und/oder einem Bereich (C) hinter der Sensorfläche (68) angeordnet ist.

19. Landwirtschaftliches Arbeitsfahrzeug nach einem der vorhergehenden Ansprüche, **dadurch gekennzeichnet, dass** der Erfassungsbereich (82) der Sensoranordnung (78) unter einem Winkel zwischen 25° und 45°, insbesondere unter einem Winkel zwischen 30° und 40°, zum Strömungsverlauf des Schüttgutes (12a) orientiert angeordnet ist.

20. Landwirtschaftliches Arbeitsfahrzeug nach einem der vorhergehenden Ansprüche, **dadurch gekennzeichnet, dass** die Steuer- und Regelungseinrichtung (52) mit zumindest zwei Sensoren (44, 46, 48) signaltechnisch verbunden ist, die zur Erfassung zumindest des ersten und zweiten von Schüttguteigenschaften unabhängigen Parameters eingerichtet sind.

21. Landwirtschaftliches Arbeitsfahrzeug nach Anspruch 20, **dadurch gekennzeichnet, dass** die zumindest zwei Sensoren (44, 46, 48) als ein Beschleunigungssensor (48), als ein Neigungssensor und/oder ein Drehzahlsensor (44, 46) ausgebildet sind.

22. Landwirtschaftliches Arbeitsfahrzeug nach Anspruch 21, **dadurch gekennzeichnet, dass** der Beschleunigungssensor (48) dazu eingerichtet ist, eine Beschleunigung (a-Z) und eine Neigung zu bestimmen.

## Claims

1. A method for determining a flow of material (GS) consisting of bulk material (12a), in particular cereals, wherein the bulk material is conveyed by means of a continuously revolving conveying device (30) having laminar conveying elements (58) from a lower bulk material receiving region (40) to a higher bulk material discharge region (42) in which the bulk material (12a) discharged from the conveying device (30) is deflected by a guide surface (66) disposed in the bulk material discharge region (42) in the direction onto a measuring device (70), wherein the flow of material (GS) is determined by the measurement of a resultant force (F_K) exerted on a sensor surface (68) of the measuring device (70), wherein at least two parameters which are independent of the properties of the bulk material and which influence the measurement of the force are detected and compensated for, **characterized in that** frictional forces (FR) transmitted from the bulk material onto the sensor surface (68) are taken into consideration as a first parameter and an inclination of the measuring device (70) is taken into consideration as a second parameter, and **in that** in addition, a flow rate (v_SG) of the bulk material (12a) sweeping over the sensor surface (68) is taken into consideration, wherein the flow rate (v_SG) is determined by a sensor assembly (78) which is disposed in front of, inside and/or behind the sensor surface (68) and the determination of the flow rate (v_SG) is carried out by the at least one contactless sensor assembly (78).

2. The method according to claim 1, **characterized in that** the frictional forces (FR) transmitted from the bulk material onto the sensor surface (68) are compensated for by a suitable arrangement of the measuring device (70) in which a resultant frictional force (F_R) acts perpendicularly to the measuring direction of the measuring device (70).

3. The method according to claim 1 or claim 2, **characterized in that** the inclination of the measuring device (70) taken into consideration as the second parameter which is independent of the properties of the bulk material is detected by a sensor (48) and compensated for during the determination of the material flow (GS).

4. The method according to one of the preceding claims, **characterized in that** an acceleration of the bulk material (12a) discharged from the conveying device (30) is detected and compensated for as the further parameter which is independent of the properties of the bulk material.

5. The method according to one of the preceding claims, **characterized in that** a change in the drive speed of the conveying device (30) is detected and compensated for as the further parameter which is independent of the properties of the bulk material.

6. The method according to one of the preceding claims, **characterized in that** the gravitational acceleration in the direction of the resultant force (F_G) exerted on the sensor surface (68) of the measuring device (70) is determined and compensated for as a parameter.

7. The method according to one of the preceding claims, **characterized in that** the determination of the flow rate (v_SG) is carried out on the basis of the Doppler effect.

8. The method according to one of the preceding claims, **characterized in that** the determination of the flow rate (v_SG) is carried out by means of an optical method.

9. The method according to one of the preceding claims, **characterized in that** the at least one sensor assembly (78) for determining the flow rate (v_SG) is disposed in a region (A) in front of, in a region (B) inside and/or in a region (C) behind the sensor surface (68).

10. The method according to one of the preceding claims, **characterized in that** the at least one sensor assembly (78) is disposed between the guide surface (66) and the sensor surface (68) or behind the sensor surface (68).

11. The method according to one of the preceding claims, **characterized in that** the presence of a closed cover for the flow of material forms a lower limiting value for the determination of the flow rate (v_SG).

12. The method according to one of the preceding claims, **characterized in that** the determination of the flow rate (v_SG) is carried out by a sensor assembly configured for the mechanical determination of a rotational speed.

13. An agricultural working vehicle with a continuously revolving conveying device (30) having laminar conveying elements (58) which conveys bulk material (12a) from a lower bulk material receiving region (40) to a higher bulk material discharge region (42) in which the bulk material discharged by the conveying device (30) is deflected by a guide surface (66) disposed in the bulk material discharge region (42) in a direction onto a measuring device (70) which is configured for determining a material flow of the bulk material (12a), wherein the flow of material is determined by the measurement of a resultant force (F_K) exerted on a sensor surface (68) of the measuring device (70), and with a controlling and regulating device (52) which is configured to compensate for at least two parameters which are independent of the properties of the bulk material which influence the force measurement to be carried out by the measuring device (70), **characterized in that** the controlling and regulating device (52) is configured to take into consideration frictional forces transmitted from the bulk material (12a) to the sensor surface (68) as a first parameter and an inclination of the measuring device (70) as a second parameter, and **in that** the controlling and regulating device (52) is additionally configured to take into consideration a flow rate (v_SG) of the bulk material (12) sweeping over the sensor surface (68) determined by at least one sensor assembly (78), wherein the flow rate (v_SG) is determined by a sensor assembly (78) which is disposed in front of, inside and/or behind the sensor surface (68) and the determination of the flow rate (v_SG) is carried out by the at least one contactless sensor assembly (78).

14. The agricultural working vehicle according to claim 13, **characterized in that** the at least one sensor assembly (78) is configured to determine the flow rate (v_SG) on the basis of the Doppler effect.

15. The agricultural working vehicle according to claim 13, **characterized in that** the at least one sensor assembly (78) is configured to determine the flow rate (v_SG) by means of an optical method.

16. The agricultural working vehicle according to one of the preceding claims, **characterized in that** the at least one sensor assembly (78) comprises a radar sensor (80) or a laser sensor.

17. The agricultural working vehicle according to one of the preceding claims, **characterized in that** the at least one sensor assembly (78) comprises an imaging device and an image evaluation system.

18. The agricultural working vehicle according to one of the preceding claims, **characterized in that** the at least one sensor assembly (78) for determining the flow rate (v_SG) is disposed in a region (A) in front of, in a region (B) inside and/or in a region (C) behind the sensor surface (68).

19. The agricultural working vehicle according to one of the preceding claims, **characterized in that** the detection zone (82) of the sensor assembly (78) is orientated at an angle between 25° and 45°, in particular at an angle between 30° and 40°, to the flow pattern of the bulk material (12a).

20. The agricultural working vehicle according to one of the preceding claims, **characterized in that** the controlling and regulating device (52) is connected for the purposes of signalling to at least two sensors (44, 46, 48) which are configured for detecting at least the first and second parameter which is independent of the properties of the bulk material.

21. The agricultural working vehicle according to claim 20, **characterized in that** the at least two sensors (44, 46, 48) are configured as an acceleration sensor (48), as an inclination sensor and/or as a rotational speed sensor (44, 46).

22. The agricultural working vehicle according to claim 21, **characterized in that** the acceleration sensor (48) is configured to determine an acceleration (a-Z) and an inclination.

## Revendications

1. Procédé de détermination d'un flux de produit (GS) composé d'un produit en vrac (12a), en particulier d'un produit en grains, le produit en vrac étant transporté au moyen d'un dispositif convoyeur (30), circulant sans fin et présentant des éléments convoyeurs (58) plats, depuis une zone de prise en charge de produit en vrac (40) située plus bas jusqu'à une zone de distribution de produit en vrac (42) située plus haut, dans laquelle le produit en vrac (12a) distribué par le dispositif convoyeur (30) est dévié en direction d'un dispositif de mesure (70) par une surface de guidage (66) placée dans la zone de distribution de produit en vrac (42), le flux de produit (GS) étant déterminé par la mesure d'une force résultante (F_K) exercée sur une surface de capteur (68) du dispositif de mesure (70), sachant qu'au moins deux paramètres, qui influent sur la mesure de la force et sont indépendants de propriétés du produit en vrac, sont détectés et compensés, **caractérisé en ce que** des forces de frottement (FR) transmises à la surface de capteur (88) par le produit en vrac sont prises en compte en tant que premier paramètre, et une inclinaison du dispositif de mesure (70) est prise en compte en tant que deuxième paramètre, et **en ce qu'**en outre, une vitesse d'écoulement (v_SG) du produit en vrac (12) balayant la surface de capteur (68) est prise en compte, la vitesse d'écoulement (V_SG) étant déterminée par un agencement de capteur (78) qui est disposé devant, dans et/ou derrière la surface de capteur (68), et la détermination de la vitesse d'écoulement (v_SG) est réalisée par l'agencement de capteur (78), au nombre d'au moins un, fonctionnant sans contact.

2. Procédé selon la revendication 1, **caractérisé en ce que** les forces de frottement (FR) transmises à la surface de capteur (68) par le produit en vrac sont compensées par une disposition appropriée du dispositif de mesure (70) dans lequel une force de frottement résultante (F_R) agit normalement à la direction de mesure du dispositif de mesure (70).

3. Procédé selon l'une des revendications 1 ou 2, **caractérisé en ce que** l'inclinaison du dispositif de mesure (70), qui est prise en compte en tant que deuxième paramètre indépendant de propriétés du produit en vrac, est détectée par un capteur (48) et est compensée lors de la détermination du flux de produit (GS).

4. Procédé selon l'une des revendications précédentes, **caractérisé en ce qu'**une accélération du produit en vrac (12a) délivré par le dispositif convoyeur (30) est détectée en tant que paramètre supplémentaire, indépendant de propriétés du produit en vrac, et est compensée.

5. Procédé selon l'une des revendications précédentes, **caractérisé en ce qu'**une variation du régime d'entraînement du dispositif convoyeur (30) est détectée en tant que paramètre supplémentaire, indépendant de propriétés du produit en vrac, et est compensée.

6. Procédé selon l'une des revendications précédentes, **caractérisé en ce que** l'accélération gravitationnelle dans la direction de la force résultante (F_G) exercée sur la surface de capteur (68) du dispositif de mesure (70) est déterminée en tant que paramètre et est compensée.

7. Procédé selon l'une des revendications précédentes, **caractérisé en ce que** la détermination de la vitesse d'écoulement (v_SG) est réalisée sur la base de l'effet Doppler.

8. Procédé selon l'une des revendications précédentes, **caractérisé en ce que** la détermination de la vitesse d'écoulement (v_SG) est réalisée à l'aide d'un procédé optique.

9. Procédé selon l'une des revendications précédentes, **caractérisé en ce que** l'agencement de capteur (78), au nombre d'au moins un, destiné à déterminer la vitesse d'écoulement (v_SG), est disposé dans une région (A) avant la surface de capteur (68), dans une région (B) située dans la surface de capteur et/ou dans une région (C) derrière la surface de capteur.

10. Procédé selon l'une des revendications précédentes, **caractérisé en ce que** l'agencement de capteur (78), au nombre d'au moins un, est disposé entre la surface de guidage (66) et la surface de capteur (68) ou après la surface de capteur (68).

11. Procédé selon l'une des revendications précédentes, **caractérisé en ce que** la présence d'une nappe fermée de flux de produit constitue une valeur limite inférieure pour la détermination de la vitesse d'écoulement (v_SG).

12. Procédé selon l'une des revendications précédentes, **caractérisé en ce que** la détermination de la vitesse d'écoulement (v_SG) est réalisée par un agencement de capteur conçu pour la détermination mécanique d'une vitesse de rotation.

13. Véhicule de travail agricole doté d'un dispositif convoyeur (30), circulant sans fin et présentant des éléments convoyeurs (58) plats, qui transporte un produit en vrac (12a) depuis une zone de prise en charge de produit en vrac (40) située plus bas jusqu'à une zone de distribution de produit en vrac (42) située plus haut, dans laquelle le produit en vrac distribué par le dispositif convoyeur (30) est dévié en direction d'un dispositif de mesure (70), conçu pour la détermination d'un flux du produit en vrac (12a), par une surface de guidage (66) placée dans la zone de distribution de produit en vrac (42), le flux de produit étant déterminé par la mesure d'une force résultante (F_K) exercée sur une surface de capteur (68) du dispositif de mesure (70) ; et doté d'un dispositif de commande et de régulation (52) qui est conçu pour compenser au moins deux paramètres qui sont indépendants de propriétés du produit en vrac et qui ont une influence sur la mesure de force devant être réalisée par le dispositif de mesure (70), **caractérisé en ce que** le dispositif de commande et de régulation (52) est conçu pour prendre en compte, en tant que premier paramètre, des forces de frottement transmises par le produit en vrac (12a) sur la surface de capteur (68), et, en tant que deuxième paramètre, une inclinaison du dispositif de mesure (70), et **en ce que** le dispositif de commande et de régulation (52) est conçu pour prendre en compte, en outre, une vitesse d'écoulement (v_SG) du produit en vrac (12) balayant la surface de capteur (68), déterminée par au moins un agencement de capteur (78), la vitesse d'écoulement (V_SG) étant déterminée par un agencement de capteur (78) qui est disposé avant, dans et/ou après la surface de capteur (68), et la détermination de la vitesse d'écoulement (v_SG) étant réalisée par l'agencement de capteur (78), au nombre d'au moins un, fonctionnant sans contact.

14. Véhicule de travail agricole selon la revendication 13, **caractérisé en ce que** l'agencement de capteur (78), au nombre d'au moins un, est conçu pour déterminer la vitesse d'écoulement (v_SG) sur la base de l'effet Doppler.

15. Véhicule de travail agricole selon la revendication 13, **caractérisé en ce que** l'agencement de capteur (78), au nombre d'au moins un, est conçu pour déterminer la vitesse d'écoulement (v_SG) à l'aide d'un procédé optique.

16. Véhicule de travail agricole selon l'une des revendications précédentes, **caractérisé en ce que** l'agencement de capteur (78), au nombre d'au moins un, comprend un capteur radar (80) ou un capteur laser.

17. Véhicule de travail agricole selon l'une des revendications précédentes, **caractérisé en ce que** l'agencement de capteur (78), au nombre d'au moins un, comprend un dispositif de formation d'image et un système d'analyse d'image.

18. Véhicule de travail agricole selon l'une des revendications précédentes, **caractérisé en ce que** l'agencement de capteur (78), au nombre d'au moins un, destiné à déterminer la vitesse d'écoulement (v_SG), est disposé dans une région (A) avant la surface de capteur (68), dans une région (B) située dans la surface de capteur et/ou dans une région (C) après la surface de capteur.

19. Véhicule de travail agricole selon l'une des revendications précédentes, **caractérisé en ce que** la zone de détection (82) de l'agencement de capteur (78) est disposée en étant orientée sous un angle compris entre 25° et 45°, notamment un angle compris entre 30° et 40°, par rapport au trajet d'écoulement du produit en vrac (12a).

20. Véhicule de travail agricole selon l'une des revendications précédentes, **caractérisé en ce que** le dispositif de commande et de régulation (52) est relié sur le plan de la technique des signaux à au moins deux capteurs (44, 46, 48) qui sont conçus pour la détection au moins du premier et du deuxième paramètre, qui sont indépendants de propriétés du produit en vrac.

21. Véhicule de travail agricole selon la revendication 20, **caractérisé en ce que** les capteurs (44, 46, 48), au nombre d'au moins deux, sont réalisés sous la forme d'un capteur d'accélération (48), d'un capteur d'inclinaison et/ou d'un capteur de vitesse de rotation (44, 46).

22. Véhicule de travail agricole selon la revendication 21, **caractérisé en ce que** le capteur d'accélération (48) est conçu pour déterminer une accélération (a-Z) et une inclinaison.
